Europäisches Patentamt

**(19)** European Patent Office

Office européen des brevets

(11) Publication number: **0 155 755**
**A2**

**(12)** EUROPEAN PATENT APPLICATION

(21) Application number: **85300705.2**

(22) Date of filing: **01.02.85**

(51) Int. Cl.⁴: **F 16 C 1/02**

(30) Priority: **21.03.84 ZA 842111**

(43) Date of publication of application:
**25.09.85 Bulletin 85/39**

(84) Designated Contracting States:
**BE DE FR IT NL SE**

(71) Applicant: **MONO PUMPS LIMITED**
**16 Great George Street**
**Bristol BS1 5RH(GB)**

(72) Inventor: **Payne, Stanley Ashbourne Eaton**
**19 Judy Road**
**Randburg Transvaal Province(ZA)**

(74) Representative: **Allen, William Guy Fairfax et al,**
**J.A. KEMP & CO. 14 South Square Gray's Inn**
**London WC1R 5EU(GB)**

(54) **Flexible drive shaft.**

(57) A flexible drive shaft for use in a helical pump or motor, and a pump or motor employing such a shaft, in which the shaft is an elongate flexible drive shaft which is rigidly secured at one end to the rotor of the helical gear pump or motor and is pivotally connected at the other end to a power transmission, such as a motor shaft.

Croydon Printing Company Ltd.

# FLEXIBLE DRIVE SHAFT

## DESCRIPTION

The present invention relates to a flexible drive shaft and to a pump or motor employing such a flexible drive shaft.

There are certain types of pump or motor in which a rotor is caused to rotate relative to a stator and at the same time to execute an orbiting motion. One such type is of the Wankel type and another is the helical gear pump or motor. In the latter type, the rotor is provided with a helical gear form having n starts and the cooperating stator is provided with a corresponding helical gear form having n $\pm$ 1 starts. Usually the stator is the outer member and the rotor is rotatable therein, although it is possible for the rotor to be the outer member.

Conventionally, the rotor is driven by a drive shaft having a universal joint type connection at each end, but this produces a problem of the bearings of the universal joint which are attached to the rotor being leached out. It has also been proposed to provide an elongate flexible drive shaft (which is usually covered with a plastics material sleeve) and to secure the drive shaft rigidly at one end to the rotor and at the other end to the drive motor shaft. However, even with a relatively small orbiting eccentricity, the flexible drive shaft has to be long, usually at least one metre, and this means that the base plate on which the pump is mounted needs to be large. This increases the cost of manufacture and makes this type of pump too large to be suitable for many customers.

According to one aspect of the present invention there is provided a flexible drive shaft for transmitting torque between a first member which rotates and a second member which rotates and orbits, said drive shaft including an elongate shaft connectable to said first and second members, said drive shaft being capable of flexing to accommodate the orbital motion of said second member, one end of the drive shaft being provided with means to secure the drive shaft rigidly to one of said members, while the other end is provided with a pivotal connection for connecting to the other member.

According to another aspect of the invention there is provided a pump or motor comprising an inner member and an outer member, which, in use, carry out a relative rotary motion and a relative orbiting motion, an elongate flexible drive shaft connected between a first of the members which carries out the orbiting motion and a rotary power transmission, said elongate flexible drive shaft being capable of flexing to accommodate the orbiting motion of said member, one end of the drive shaft being secured rigidly to said first member and the other end of the drive shaft being pivotally connected to the power transmission.

By using an elongate flexible drive shaft which is pivotably connected at one end to the rotary power transmission, e.g. a drive motor shaft, the lengths of the flexible shaft can be significantly reduced even though the other end of the flexible drive shaft is rigidly connected to the first member, e.g. a pump rotor. This rigid connection obviates the problem of leaching out of the joint occurring with a conventional drive shaft having a universal joint at each end.

With prior known flexible drive shafts and those of the invention, it has been found that the degree of flexing (eccentricity) required from the shaft in any particular application and the endurance limit (fatigue strength) in flexure of the drive shaft are the main factors governing the dimensions of a workable shaft. The fatigue strength of the material, more particularly a ferrous material, for the purposes of this Specification, is defined as the largest maximum stress a polished specimen of that material can endure without breaking when subjected to $10 \times 10^6$ fully

reversed harmonic stress variations.

It has been found, for example, that a value of about 310 MPa may be used as a permissible design stress or EN57T material. This value incorporates a satisfactory factor of safety relative to the fatigue strength of EN57T.

While it was the practice with known flexible drive shafts rigidly secured at both ends to provide a coating of plastics material to reduce the problems of corrosion fatigue, the smaller stresses which are encountered using a flexible drive shaft which is pivotably connected at one end, reduced this problem significantly, so that it is often not necessary to provide such a coating, thereby reducing the cost of the drive shaft.

In order that the invention may more readily be understood, the following description is given, merely by way of example, reference being made to the accompanying drawings, in which:-

Figure 1 is a side elevation, in part axial section, of a pump having one embodiment of drive shaft according to the invention;

Figures 2, 3 and 4 are each side elevations of three different embodiments of flexible drive shaft according to the invention;

Figure 5 is a graphical representation of length to diameter (L:D) ratios plotted against eccentricity for one, three, and six stage pumps; and

Figure 6 is a similar representation of L:D ratios plotted against eccentricity for two and four stage pumps.

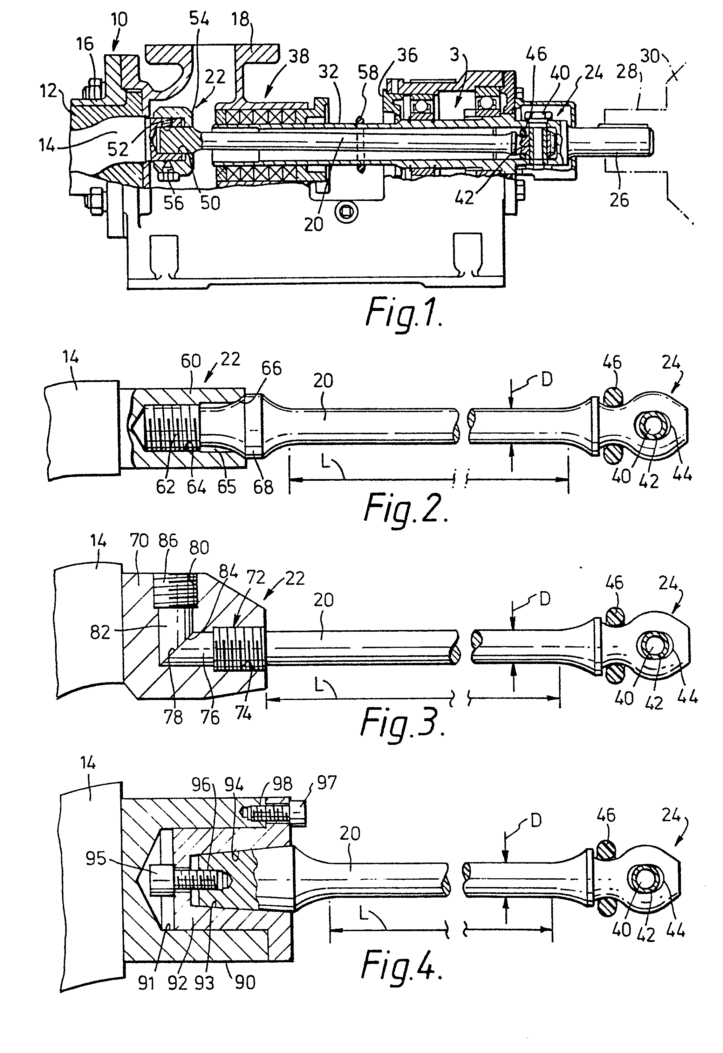

Referring first to Figure 1, there is illustrated therein a helical gear pump 10 having a stator 12 in which is rotatably mounted a rotor 14, the stator and rotor each being provided with a helical gear formation, one of them with a gear formation with n starts and the other with a gear formation of n $\pm$ 1 starts.

Surrounding the stator 12 is a barrel 16 which is bolted to an inlet casing 18 and an outlet casing (not shown).

A flexible elongate drive shaft 20 is connected to the rotor 14 by a rigid connection 22 to be described in detail below. At the other end, the drive shaft 20 is provided with a pivotal connection 24 to a power transmission rotary member 26. This member 26 is keyed to a shaft 28 of a motor 30.

The member 26 is formed integrally with a rotary tube 32 which is mounted in bearings 34 provided with a seal 36. Where the rotary tubes 32 passes into the inlet casing 18, a gland 38 is provided.

The pivotal connection 24 includes a pivot pin 40 passing through a bush 42 engaged in an opening 44 in the drive shaft 20. Adjacent the pivot pin 40 the drive shaft is provided with a surrounding sealing ring 46.

The rigid connection 22 to the rotor 14 comprises a shaped end portion 48 of the flexible drive shaft 20, engaged in a correspondingly shaped recess 50 in the rotor. The end portion is locked rigidly into the recess by grub screws 52 which themselves are prevented from loosening by a cover 54 held by locking screws 56.

It will be seen that the outer surface of the rotary tube 32 is provided with an oil slinger 58.

It will be appreciated that when the motor 30 causes the shaft 28 to rotate, this in turn will rotate the rotary member 26 and the pivotal connection 24 will allow limited pivoting motion between the rotary member 26 and the flexible drive shaft 20. On the other hand, at the other end of the drive shaft there is a true rigid connection between the rotor and the drive shaft. However, the provision of the pivotal connection 24 enables the drive shaft to be significantly shorter than has hitherto been possible with a flexible drive which is rigidly connected at each end. Because the pivotal connection is remote from the rotor and because suitable seals are provided, there will be little chance of the pivotal connection itself becoming leached out.

A slightly modified arrangement is shown in Figure 2 in which the rotor shaft 20 is provided with an identical pivotal connection 24 to that described above. This Figure shows more clearly the positioning of the bush 42 and pivot pin 40 in the opening 44.

The rigid connection 22 in this instance is provided by an extension 60 on the rotor 14 being provided with the threaded bore 64 into which is screwed a threaded end 62 of the drive shaft. The bore 64 includes a widened portion 65 having an annular chamfer 66 engaged by a corresponding annular chamfer on thickened portion 68 of the drive shaft.

Figure 2 illustrates the length L and the diameter D of the drive shaft, the length L being measured on the uniform diameter portion of the drive shaft.

Referring now to Figure 3, again the pivotal connection 24 of the drive shat 20 is identical to that illustrated earlier. In this construction, the rigid connection 22 is provided by forming in an extension 70 of the rotor 14, a threaded bore 74 in which is screwed a threaded shaft 72 having an end portion 76 extending beyond the threaded part 72 and provided with a chamfer 76.

A transverse bore 80 intersects the axial threaded bore 74 and is threaded at its outer portion. Inserted into this bore is a locking element 82 having a chamfer 84. Threaded into the bore 80 is a plug 86 adapted to force the locking element downwardly, as illustrated in Figure 3, so that the two chamfers 76, 84 are in abutting locking relation, thereby preventing the shaft 20 from rotating.

Figure 4 shows the rotor 14 provided with an extension 90 having an axial bore 91 formed therein into which is inserted an adaptor 92. This adaptor includes a tapered bore 93 into which is inserted the tapered end 94 of the drive shaft 20. In order to secure the tapered end 94 in the bore 93, a bolt 95 is screwed into a threaded bore 96 in the end of the rotor. Adaptor 92 in turn is held in place on the rotor extension 90 by a number of further bolts 97 engaged in threaded bores 98 therein.

The tapers 93 and 94 are of the "Morse taper" type having the appropriate angle to cause the two parts to lock together against relative rotational movement.

The diameter of the shaft 10, and its length, will depend largely upon the material used, the degree of eccentricity which has to be catered for and also the torque which has to be transmitted.

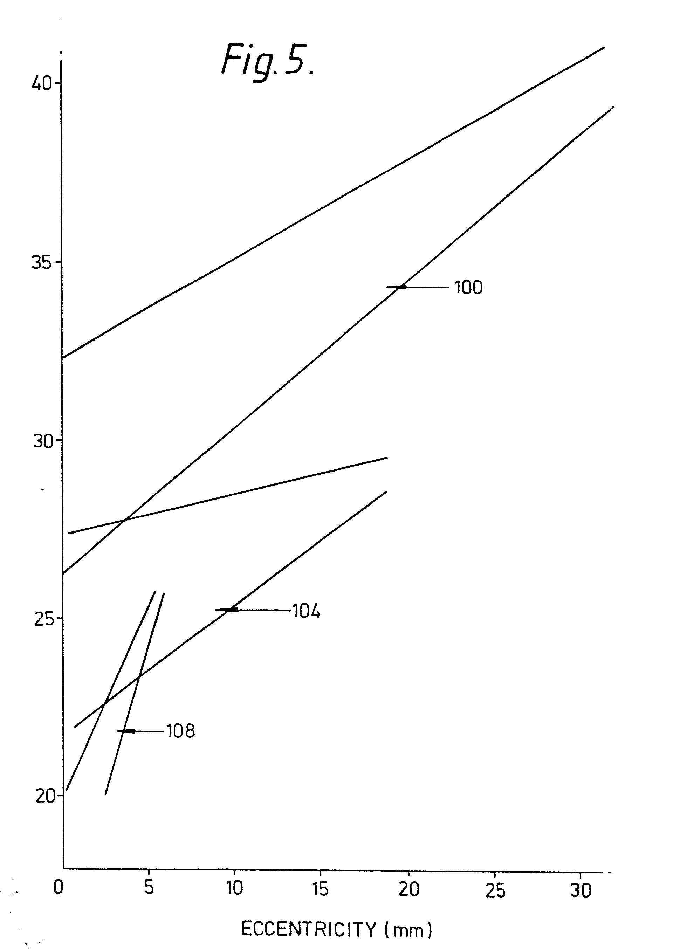

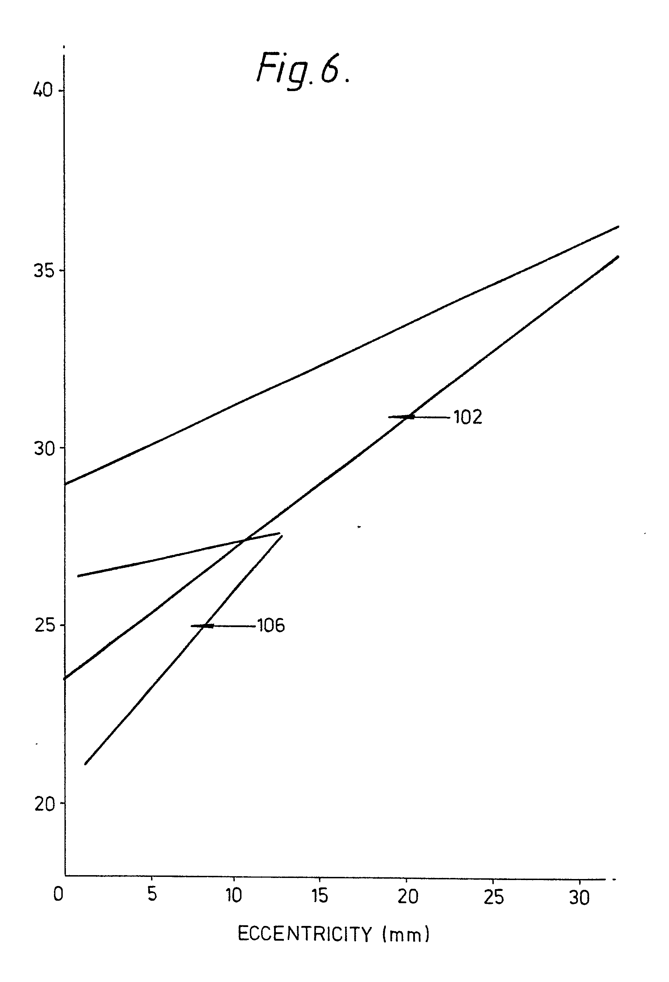

Referring to Figures 5 and 6 of the drawings, various L:D ratios for shafts according to the invention have been plotted against eccentricity in millimetres. L is the length of that part of the shaft which has a constant section modulus. D is the diameter of the shaft which, in each case, is a solid shaft of circular cross-section. The values have been plotted for shafts for pumps of various stages. Thus, Figure 5 shows plotted values for shafts of one, three and six stage pumps, and Figure 6 shows plotted values for shafts of two and four stage pumps. A stage refers to the chamber defined between rotor and stator where they engage sealingly at axially spaced zones. By suitably increasing the lengths of rotor and stator it is possible to increase the number of stages.

The L:D ratio for a shaft according to the invention for a single stage pump should preferably not lie below the lower limit of the zone indicated by reference numeral 100. The L:D ratio preferably lies within that zone. Where the length of shaft is of no consequence as for instance in borehole pumps, then the L:D ratio may lie above the upper limit of the zone 100.

The zone for the L:D ratios of shafts for two stage pumps is indicated by reference numeral 102. Here also the L:D ratio for a shaft for a two stage pump should not lie below the lower liumt of zone 102. This zone 102 is interpreted similarly to zone 100.

The zones for the L:D ratios of shafts for three four

-7-

and six stage pumps are indicated by reference numerals 104, 106 and 108 respectively. These zones are interpreted similarly to zones 100 and 102.

The graphs have been plotted for shafts of EN57T material. It emerges from the graphs that the L:D ratios vary from about 20:1 to 40:1 depending on the circumstances of each application.

With typical eccentricities used by the Applicants in their rotary pumps in extreme cases in which a larger than the normal percentage of the total stress in the shafts is due to flexing, the L:D ratio may be as low as about 15 to 1 of EN57T is used as a shaft material.

If materials have exceptionally good fatigue strength properties are used, the L:D ratio in extreme cases may be as low as about 10 to 1.

# C L A I M S

1. A flexible drive shaft for transmitting torque between a first member (26) which rotates and a second member (14) which rotates and orbits, said drive shaft including an elongate shaft (20) connectable to said first and second members, said drive shaft being capable of flexing to accommodate the orbital motion of said second member, characterised in that one end of said drive shaft is provided with means (22) to secure the drive shaft rigidly to one of said members (14), while the other end is provided with a pivotal connection (24) for connecting it to the other member.

2. A flexible drive shaft according to claim 1, characterised in that the means (22) to secure the drive shaft rigidly comprise a screwthread (62,72)adjacent said one end of said drive shaft.

3. A flexible drive shaft according to claim 1, characterised in that the means (22) to secure the drive shaft rigidly comprise a tapered portion (94) adjacent said one end adapted to cooperate with a correspondingly tapered bore (93) in said one member.

4. A pump or motor comprising an inner member (14) and an outer member (12), which, in use, carry out a relative rotary motion and a relative orbiting motion, an elongate flexible drive shaft (20) connected between a first of the members (14) which carries out the orbiting motion and a rotary power transmission (26), said elongate flexible drive shaft being capable of flexing to accommodate the orbiting motion of said member, characterised in that one end (22) of the drive shaft is secured rigidly to said first member and the other end (24) of said drive shaft is pivotally connected to the power transmission.

5. A pump or motor according to claim 4, characterised in that the means (22) to secure the drive shaft rigidly to said first member comprise a screwthread (62, 72) on said drive shaft adjacent said one end and a screwthreaded axial bore (64,74) in said first member (14) into which said one end of the drive shaft is secured.

6. A pump or motor according to claim 5, characterised in that means (76-86) are provided to lock said screwthread.

7. A pump or motor according to claim 6, characterised in that said one of the drive shaft is provided with a chamfer (78), in that a threaded transverse bore (80) is formed in said first member to intersect said axial bore (74), in that a locking element (82) provided with a cooperating chamfer (84) to that of the one end of the drive shaft is inserted in the transverse bore and in that a threaded plug (86) is screwed into the transverse bore to hold the two chamfers (76,84) in abutting relation.

8. A pump or motor according to claim 4, characterised in that the means (22) to secure the drive shaft rigidly to said first member comprise a tapered bore (93) in said first member and a correspondingly tapered end portion (94) to said drive shaft.

Fig.1.

Fig.2.

Fig.3.

Fig.4.

0155755

Fig.5.

Fig.6.

0155755

3/3

ECCENTRICITY (mm)